# EUROPEAN PATENT SPECIFICATION

(11) **EP 0 722 597 B1**
(45) Date of publication and mention of the grant of the patent: **02.06.1999**
(21) Application number: 94930065.1
(22) Date of filing: 06.10.1994
(51) Int. Cl.: G06K 19/14

(54) **SECURITY READER FOR AUTOMATIC DETECTION OF TAMPERING AND ALTERATION**
SICHERHEITSLESER ZUR AUTOMATISCHEN ERFASSUNG VON VERFÄLSCHUNGEN UND ÄNDERUNGEN
LECTEUR DE SECURITE POUR LA DETECTION AUTOMATIQUE DE FALSIFICATIONS ET D'ALTERATIONS

(30) Priority: 06.10.1993 AU PM1661/93
(43) Date of publication of application: 24.07.1996
(73) Proprietor: MINNESOTA MINING AND MANUFACTURING COMPANY, St. Paul, Minnesota 55133-3427 (US)
(72) Inventor: MANN, Graeme, R., Engadine, NSW 2233 (AU)
(74) Representative: VOSSIUS & PARTNER
(86) International application number: US9411359
(87) International publication number: WO9510097

(56) References cited:
- EP-A- 0 219 012
- FR-A- 2 594 982
- GB-A- 2 212 445
- US-A- 4 222 662

## Description

### Technical Field

The present invention relates generally to a system for recovering visual data from a document that has been covered by a security laminate, and then examining the integrity of the document to ensure that no tampering or alteration has occurred to either the document or the visual data contained thereon.

### Background

There is a wide variety of different types of documentation that contain information of a very important nature that, by itself, assigns legal title to, or possession of, such a document, or of an article to which that document relates. Examples of such documents are, but not limited to, passports, identity (I.D.) cards, land titles, share titles, etc. Ownership of such items is generally declared by a typed, printed, photographic, or handwritten inclusion on that item, detailing for example the owners name, address, signature, and so on.

Using commonly available technology it is possible to alter such typed, printed, photographed or handwritten details in such a way that the document can then show that ownership of that document, or an article to which that document relates, has been transferred to a party not legally entitled to that document or article.

The major concern here is that, although the document itself is a legal instrument in that it has not been forged, duplicated or simulated, and therefore this document will pass an appropriate security check, the details contained thereon have been altered and therefore give a false assignment of that legal document.

To impede the successful tampering or alteration of such details it is a known practice to apply a security laminate over the top of such details. Such laminates invariably contain security break indicators that will clearly reveal as to whether that laminate itself is genuine, whether that laminate has been lifted and replaced, whether that laminate's surface has been penetrated, and whether that laminate surface has been overprinted or overlabelled.

It is a further practice to add areas of printing or patterns which only respond to ultra-violet or infra-red excitation.

To examine a document thus protected with such a laminate or ultra-violet or infra-red markings, a special viewer is employed whereby an examiner or security official can observe the document by means of placing such document in that special viewer and applying differing light sources to reveal both the protected details and the integrity of the protective security laminate. The examination is carried out by an examiner or security official by physically signing the document in question and by making a valued judgment as to its contents and integrity.

There is a growing need to automate this process.

US-A-4 222 622 describes an access control system including an identification card having a specific structure and an apparatus for reading the identification card. The identification card has a first layer having a typical photograph on one portion of the layer and another portion having an optical filter having a high optical loss in the visible light spectrum. On a second layer beneath the first layer is a transparent photograph aligned with the optical filter portion of the first layer. On a third layer beneath the second layer, retroreflective sheeting is aligned with the optical filter and the transparent photograph of the first and second layers. The apparatus for reading the identification card has a first lamp (LAMP W1) which provides overall illumination of the card and a second lamp (LAMP W2) which provides infrared or ultraviolet radiation to the portion of the card having the optical filter. The retroreflective sheeting provides high gain to the IR or UV light and the optical filter does not attenuate the IR or UV light as much as visible light, thereby allowing viewing of the transparent photograph using a camera sensitive to IR or UV radiation.

EP-A-0 219 012 describes a data card having a transparent cover sheet covering a core layer. The cover sheet has the form of several cylindrical lenses arranged next to each other, the lenticulation being embossed in the cover sheet. The field of view is narrowed due to focussing through the cylindrical lenses, thereby restricting the field of view to certain angular ranges based on the focal plane of the lenses. Information is introduced to the surface of the core layer of the data card using lasers directed at the lenticulation at various angles. The introduced information on the core layer will only be visible to a viewer at the angle at which the laser beam entered the lenticulation. Thus, in one embodiment, information is introduced at a perpendicular angle of incidence and 27 degrees from normal to each side. Thus, three separate sets of information can be obtained by viewing the data card from three different angles. A card reader is shown in Figure 6 of this document. The reader has a plurality of light sources for illuminating the surface of the core layer of the data card. The reader further has three light detectors, each light detector directed towards the data card at one of the three viewing angles. Each light detector only receives light from a small angular region, thereby ensuring that the light detector only reads the one set of information from the surface of the core layer corresponding to one of the viewing angles.

### Summary of the Invention

It is therefore an object of the present invention to provide an arrangement that substantially ameliorates the problems alluded to above.

The object is solved by the features of the claims.

Desirably, a device which can be controlled from computerized control equipment, which views through laminate and transfers an image of the protected details to the computerized control equipment for further processing, such as decoding, and then views the structure of the laminate itself and transfer its details to the computerized control equipment for further processing, such as examining this structure for irregularities, is provided.

Also provided is a hardware device which scans the images in both a "look through" and a "look at" mode and transfers corresponding images to an associated processing unit.

Apparatus configured in accordance with the present invention is able to view through the securing laminate to reveal details of the information contained thereunder, and then view the structure of the laminate in such a way as to show the areas on the security laminate which no longer conform to the original manufacturing specification, thus indicating possible forgery, tampering or alteration, and preferably to reveal the presence of other indicators such as may become visible through ultra-violet or infra-red excitation.

In accordance with one aspect of the present invention there is disclosed an arrangement for reading information from a first light transmissive layer and a second layer of an object, said arrangement comprising, in combination:
first light source means for directing (first) light at a first angle of incidence at the object;
second light source means for directing (second) light at a second angle of incidence, different to said first angle of incidence, at the object;
a light receiving device for receiving a reflection of said first light from said first layer, and a reflection of said second light from said second layer and to produce at least one image signal; and
a processing device for processing said image signal to provide information regarding said layers.

Preferably, the first layer comprises a plurality of glass spheres or spheres of material having similar optical properties to glass, referred to herein as microspheres. Alternatively, the first layer comprises a clear material having similar optical properties to polyester.

Preferably, the first light means comprises one or more sources that are directed to said object by first being refracted from a two-way mirror, the light having been reflected by the first layer then returning again through the two-way mirror to the light receiving device. The first light illuminates preferably at multiple different intensities as controlled by the processing device.

Preferably, the processing device is a data processing unit such as a personal computer.

Preferably, the first and second light means are switchable so as to operate alternately or in unison, and of variable intensity. The first and second light means can be of different optical bandwidths. The light source means can also be within the visible spectrum, and/or in the ultra-violet band and/or in the infra-red band. The light produced can be polarized or unpolarized.

Preferably, the light receiving means is a video image receiver such as, for example, a charge coupled device.

Preferably, the first layer is a sheet of plastics material having said spheres of glass or the like applied thereto. Alternatively the first layer can be a sheet of clear or plain polyester or similarly functioning material.

Preferably, said second layer is a document located below the first layer such as for example the page of a passport.

Preferably, the angle of reflection of one light source relative to the position of the video image receiver is less than 1°. Alternatively, the angle of reflection of one light source relative to the position of the video image receiver is greater than 1°.

There is a second mode of use whereby a sighting is made directly down a beam of light whereupon the details are no longer seen but are replaced by an image of the physical structure of the laminate surface. Alternatively, in this second mode of operation the details are no longer seen but are replaced by the distorted image of the light source being "mirrored" by the surface of the polyester laminate.

In accordance with another aspect of the invention there is provided a frame into which the document or passport is positioned.

In accordance with another aspect of the invention there is provided a multiplicity of light sources wherein some light sources strike the surface of the document and reflect back to the viewing position at an angle greater than 1°.

In accordance with another aspect of the invention there are provided other light sources that strike the document and reflect back to the viewing position at an angle less than 1°.

In accordance with another aspect of the present invention there is provided means by which these light sources are operated from an attached controlling device such as, but not limited to, a personal computer.

The video imaging device or similar sensory array may be located at the view position and directed towards the surface of the document. Images detected by this device are provided with a means whereby said images can be passed onto an attached controlling device such as, but not limited to, a personal computer.

### Brief Description of the Drawings

A preferred embodiment of the present invention will now be described, by way of example, with reference to the accompanying drawings, in which:
Fig. 1 is a schematic cross-section of a typical document over which has been fixed a retroreflective security laminate;
Fig. 2 schematically illustrates the optical properties of the security laminate of Fig. 1;
Fig. 3 schematically illustrates an optics arrangement of the preferred embodiment; and
Fig. 4 illustrates the light paths of the arrangement of Fig. 3.

These figures, which are idealized, are not to scale and are intended to be merely illustrative and non-limiting.

### Detailed Description of the Drawings

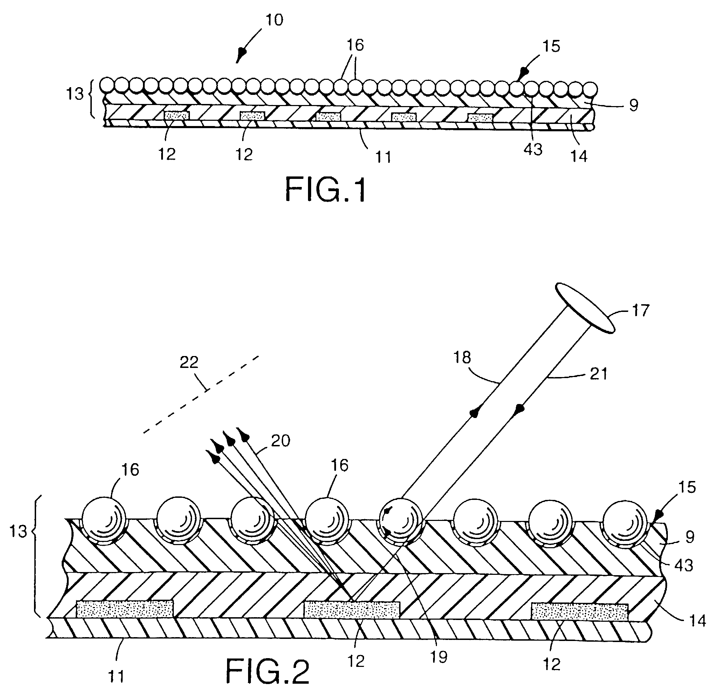

Fig. 1 illustrates a cross-section of the "secured" document 10 having a document substrate 11, with added typing, printing, bar code, photo, or handwriting collectively known herein as a source image 12. The source image 12 is shown in exaggerated size, for the purpose of clarity, and is covered by a composite layer of a security laminate 13. The laminate 13 comprises a retroreflective layer 15 that is made up of a monolayer of microspheres 16, typically formed by glass, an underlying partially-light-transmissive reflective layer 43, typically binder layer 9, and an adhesive layer 14. An example of a suitable laminate 13 is disclosed in Australian Patent No. 462,214 (Sevelin) which corresponds to U.S. Patent No. 3,801,183. Minnesota Mining and Manufacturing Company's CONFIRM Brand Security Laminates are examples of commercially available laminates suitable for use in the preferred embodiment.

Fig. 2 illustrates the optical characteristics of the monolayer 15 of microspheres 16. A light source 17 emits a beam of light 21 that travels towards or is incident upon the laminate 13. In this illustration, the beam of light 21 enters one of the microspheres 16 and is split, with one portion 18 being retroreflected back toward the light source 17 and one portion 19 being transmitted so as to reach the substrate 11 or source image 12, as illustrated. The splitting of light beam 21 is a result of the optical properties of microspheres 16 and underlying reflective layer 43 which includes specular reflectors which are sometimes referred to as being "partially-light-transmissive".

The transmitted light portion 19, passes through the microsphere 16, through the reflective layer 43 and the adhesive layer 14 and strikes the substrate 11, which is opaque, or the source image 12 of the document 10. From there, the light beam is reflected and scattered to produce a number of beams 20.

It can be noted from Fig. 2 that the portion of the light beam 21 that is returned to the source 17 along the light path 18 can be said to be returning from the microsphere 16, at an angle less than 1° and thereby substantially parallel, if the position of the source 17 is also considered to be a viewing position.

It is further noted that whilst Fig. 2 illustrates the optics of a single microsphere 16, all microspheres within the laminate 15 give a corresponding response.

However, if a position 22 is considered to be the viewing position relative to the light source 17, then it can be said that the beams 20 are reflecting at an angle greater than 1° from the surface of the document 10, even though these beams 20, in fact, penetrate the retroreflective layer 15, and reflect from the substrate 11 and source image 12.

Not illustrated in Figs 1 or 2, the laminate can alternatively comprise a polyester laminate, known to be used for document security and which comprises a polyester layer, and an adhesive layer corresponding to the adhesive layer 14. The polyester layer has the property that, whilst being transparent to ordinary diffuse light, it is also substantially specularly reflective of light incident at angles substantially normal to the film.

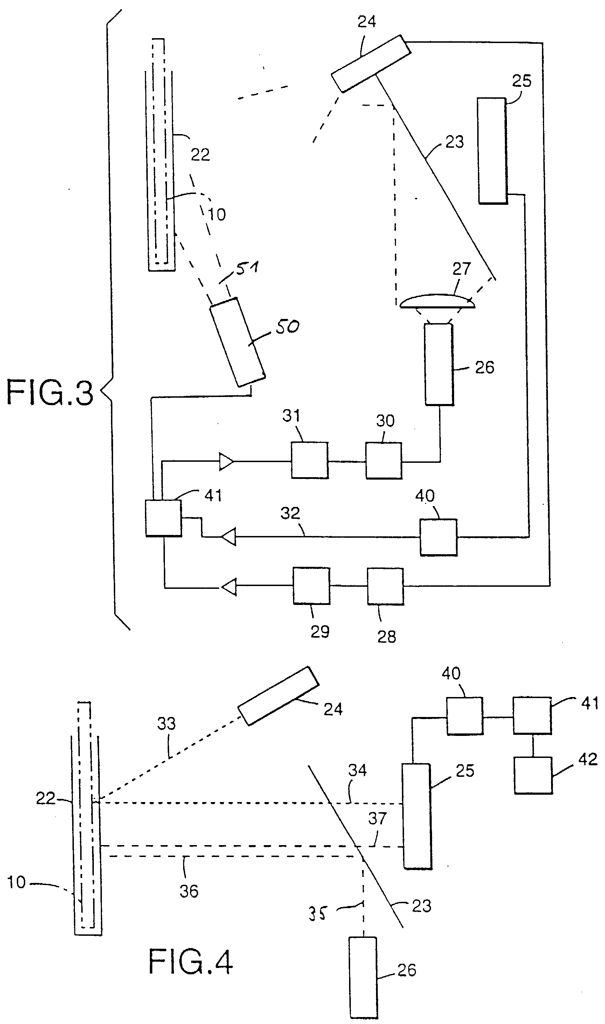

Fig. 3 illustrates an arrangement of one preferred embodiment of a system that comprises two light sources and one viewing position. An alternative configuration of a single light source and to viewing positions can be used. However the "optical" characteristics of both systems are identical.

A view frame 22 is provided that accurately locates the document 10 to be viewed.

A first light source 26 is focused by a lens 27 onto a beam splitting (two way) mirror 23. The turning properties of mirror 23 produce a light source which appears to a viewing position 25 as being returned from the surface of the document 10 at an angle of less than 1°.

A second light source 24 is provided which is arranged to be at an angle relative to the viewing position 25, of greater than 1°. The light source 24 is controlled by power source 28 and trigger source 29 which in turn is controlled by an attached personal computer 41 or equivalent computerized controller. In other embodiments, multiple ones of the first light source 24 can be used.

Arranged at the viewing position 25 is a video image receiver 40 such as, for example, a charge coupled device (CCD).

The light source 26 is controlled by power source 30 and trigger source 31 which in turn is controlled by the personal computer 41 controller. In other embodiments multiple ones of light source 26 can be used.

Each of the power sources 28,30 are configured so as to adjust the intensity of the respective light source 24,26 through a multiplicity of intensities from a minimum value, such as "just on", to a maximum value, such as "full-on".

A line 32 is the signal path for images recovered by the video image receiver 40 being returned to the personal computer 41 for image processing.

Fig. 4 illustrates the light paths within the preferred embodiment of Fig. 3. The object document 10 is being examined for both content and security integrity.

The light source 24, relative to the viewing position of the video image receiver 40, is at an angle greater than 1° when emitted light path 33 is measured against a return beam 34. When the light source 24 is illuminated, the beam 33 penetrates the microsphere structure of the document 10 and reflects from the substrate 11 and source image 12 beneath.

The video image receiver 40 can therefore "look through" the laminate 13.

When the light source 26 is illuminated, a beam of light 35, is redirected as a beam 36, towards the document 10, due to the properties of beam splitting mirror 23.

The beam 36 is then reflected as a beam 37 by the surface of the microsphere structure of the document 10 being at an angle of less than 1°. In this case the light source 26 does not appear to penetrate the microsphere structure but instead can be said to "look at" the microsphere structure of the laminate.

The characteristics of document 10 can be detected by the video image receiver 40 and passed on for analysis by the personal computer 41 dependent on which of the light sources 24 or 26 is illuminated. In a mode where the source image 12 contained on the document 10 needs to be passed to the computer 41, the computer controlled light source 24 is illuminated.

In a mode where the minute details of the structure of the microspheres of the laminate 13 need to be passed on to the computer 41, then computer controlled light source 24 is extinguished and light source 26 is illuminated.

As an alternative to alternately switching light sources 24 and 26, the beams of light 33 and 35 can be filtered to include light only of a limited or predetermined wavelength or polarity. In such a situation, both light sources 24 and 26 can be enabled simultaneously and appropriate computer software is used to process and resolve a dual image created thereby.

Images processed and produced by the computer 41 can be displayed for examination on a video display unit 42 associated therewith.

Through external processing it is possible to identify that a retroreflective laminate exists, or that a plain polyester laminate exists, or that neither exist.

It is a pre-condition of the following explanation that in the previous step of recovering visual data from the document and decoding that data into computer compatible codes, it is revealed as to which type of laminate is supposed to be protecting said document. This is achieved through a "reference" or "look-up" table in such an external device as assigning "this style of laminate to this series of protected document", e.g., Australian passports contain a retroreflective laminate, British passports contain a polyester laminate, etc. These pre-conditions and external controls can be programmed into the personal computer 41.

If external control determines that a retroreflective laminate should be present, light sources 24 and 26 are illuminated at minimum intensity If a retroreflective laminate is present a visual response will be detected over the entire viewing area of the video image receiver 40.

If no laminate is present there will be insufficient light intensity to illuminate the source image 12 and the video image receiver will see no visual response.

If a polyester film or similar laminate is present the mirrored image will be in the form of a distorted flairing in the center of the video image area roughly equal to the image of the light source.

When external control determines that a retroreflective laminate exists, light sources 24 and 26 are excited to illuminate to mid brilliance where the microsphere structure reflects a much brighter signal which makes it possible to distinguish the background bead signal from any hidden source image contained in the microsphere structure. Control within the computer 41 then attempts to pattern match this hidden source image against a pattern that has been stored as part of the reference for the item being examined.

In order to examine for microsphere structure damage, the light sources 24 and 26 are illuminated to full brilliance where any damage is identifiable as a dark area against the intact microsphere structure. The computer 41 is configured to apply a brightness threshold across the video image in order to reveal the dark areas.

If external control determines that a polyester laminate should be present, the light source 26 is illuminated to a minimum brilliance. A distorted image of the light source will be seen by the video image receiver as a distorted bright flair in roughly the center of the image area. This pattern is stored. The light source 26 is then increased in intensity progressively. If the image of the flairing is seen to grow in area in the correct proportion to the original image then the light source is "looking at itself in the mirror" and confirmation is given that polyester laminate exists.

To examine for surface cuts, a further light source 50 is aimed at the surface of the document 10, 89° away from the axis of the light source 26. This is achieved by creating a beam of light 51 that is focused across the surface of the document 10, in either the horizontal or vertical plane depending on the orientation of the document 10. The focused light 51 is reflected from the document 10 back through the mirror 23 and is detected by the image receiver 40. Cuts will show up as flairs in the surface of the laminate that were not detected under light source 24.

If external control indicates that no laminate is or should be present, the light source 26 is illuminated to full brilliance and the image gathered is compared to the image seen by the light source 24. If they are identical then there is no laminate present.

To check for the presence of ultra-violet or infra-red responses, as determined by the "reference" or "look-up" tables, under external control a corresponding light source is illuminated and the video image receiver 40 should detect a specific color response at a specific x/y coordinate, which is resolvable by the computer 41.

The presence of patterned diffraction gratings, sometimes referred to as "kinegrams", and of holographic embossings, can also be revealed through the activation of the aforementioned light sources. In these cases the gratings reveal their position and shape as being a difference in the color responses as revealed by two differently angled light sources. Computer analysis can compare the responses to provide a determination of the presence or otherwise of holographs or embossings.

## Claims

1. An apparatus for reading information from a first light transmissive layer and a second layer of an object, said apparatus comprising:
first light source means (26) for directing light (35, 36) at a first angle of incidence at the object at a first time;
second light source means (24) for directing light (33) at a second angle of incidence, different to said first angle of incidence, at the object at a second time;
a light receiving device (40) for receiving a reflection (37) of said first light (35, 36) from said first layer at said first time, and a reflection (34) of said second light (33) from said second layer at said second time and to produce at least one image signal; and
a processing device (41) for processing said image signal to provide information regarding said layers.

2. An apparatus for reading information from a first light transmissive layer and a second layer of an object, said apparatus comprising:
first light source means (26) for directing light of a first predetermined wavelength or polarity (35, 36) at a first angle of incidence at the object;
second light source means (24) for directing light of a second predetermined wavelength or polarity (33) at a second angle of incidence, different to said first angle of incidence, at the object;
a light receiving device (40) for receiving a reflection (37) of said first light (35, 36) from said first layer, and a reflection (34) of said second light (33) from said second layer and to produce at least one image signal; and
a processing device (41) for processing said image signal to provide information regarding said layers.

3. An apparatus as claimed in claim 1 or 2, wherein the first layer comprises a plurality of microspheres (16) having similar optical properties to glass.

4. An apparatus as claimed in claim 1 or 2, wherein the first layer comprises a material having similar optical properties to polyester.

5. An apparatus as claimed in any of claims 1 to 4, further comprising a two-way mirror (23) for directing the first light (35, 36) to said object, and arranged so that the first light having been reflected by the first layer passes through the two-way mirror for detection by the light receiving device (40).

6. An apparatus as claimed in any one of the preceding claims wherein the processing device is a data processing unit such as a personal computer (41).

7. An apparatus as claimed in any one of the preceding claims, wherein the first and second light source means (26, 24) are switchable so as to operate alternately or simultaneously.

8. An apparatus as claimed in any one of the preceding claims, wherein each of the first and second light source means (26, 24) are individually intensity controlled.

9. An apparatus as claimed in any one of the preceding claims, wherein the first and second light source means (26, 24) produce light at different bandwidths, and/or different wavelengths.

10. An apparatus as claimed in claim 9 wherein said light is selected from the group consisting of ultra-violet light and infra-red light.

11. An apparatus as claimed in any one of the preceding claims, wherein the light receiving means (40) comprises a video image receiver, such as for example, a charged coupled device.

12. An apparatus as claimed in claim 3 or any one of claims 4 to 11 when dependent on claim 2, wherein the first layer is a sheet of plastics material (9) having said microspheres (16) applied thereto.

13. An apparatus as claimed in any one of the preceding claims, wherein said second layer is a document (10) located below the first layer, said document (10) comprising a source image (12).

14. An apparatus as claimed in claim 12, wherein said document (10) comprises a substrate (11) upon which said source image (12) is formed, said substrate and said source image having different light reflective properties.

15. An apparatus as claimed in claim 13 or 14, wherein said document (10) is selected from the group consisting of a passport, an identity card, a land title, and a share title.

16. An apparatus as claimed in any one of the preceding claims, wherein an angle of reflection of said first light relative to the position of the light receiving means (40) is less than 1°.

17. An apparatus as claimed in any one of the preceding claims, wherein an angle of reflection of said second light relative to the position of the light receiving means (40) is greater than 1°.

18. An apparatus as claimed in any one of the preceding claims, wherein said processing device (41) compares said image signal with at least one predetermined image to provide said information.

19. An apparatus as claimed in any one of the preceding claims, wherein said image signal represents a combination of said first light and said second light.

20. An apparatus as claimed in any one of the preceding claims, further comprising a third light source means (50) for directing (third) light (51) at a third angle of incidence, at least substantially normal to said first light, at said object, said third light being focused in a plane across a surface of said object.

21. An apparatus as claimed in any one of the preceding claims wherein said image signal comprises a first image signal derived from illumination of said first light source means (26), and a second image signal derived from said second light source means (24), and said processing comprises comparing the first image signal with the second image signal to determine a color difference response, said response being indicative of a patterned diffraction grating or a holographic embossment formed in on said object.

22. A system for reading information, said system comprising an apparatus according to any of claims 1 to 21 and an object including a first light transmissive layer and a second layer.

23. A method for examining an object having a source image (12) and an overlying light transmissive layer, said method comprising the steps of:
directing light at a first time at a first angle of incidence at said layer to cause reflection of light from said layer;
directing light at a second time at a second angle of incidence at said source image (12) to cause reflection of light from said source image (12);
detecting said reflected light from said layer at said first time and at a first viewing location to provide a first detected image;
detecting said reflected light from said source image (12) at said second time and at a second viewing location to provide a second detected image; and
processing said first and/or second images to resolve information regarding said source image (12) and/or said layer.

24. A method for examining an object having a source image (12) and an overlying light transmissive layer, said method comprising the steps of:
directing light of a first predetermined wavelength or polarity at a first angle of incidence at said layer to cause reflection of light from said layer;
directing light of a second predetermined wavelength or polarity at a second angle of incidence at said source image (12) to cause reflection of light from said source image (12);
detecting said reflected light of said first predetermined wavelength or polarity from said layer and said reflected light of said second predetermined wavelength or polarity from said source image (12) to provide first and second detected images; and
processing said first and/or second images to resolve information regarding said source image (12) and/or said layer.

## Patentansprüche

1. Vorrichtung zum Auslesen von Informationen aus einer ersten lichtdurchlässigen Schicht und einer zweiten Schicht eines Objekts, mit:
einer ersten Lichtquelleneinrichtung (26) zum Richten von Licht (35, 36) auf das Objekt zu einem ersten Zeitpunkt unter einem ersten Einfallswinkel;
einer zweiten Lichtquelleneinrichtung (24) zum Richten von Licht (33) auf das Objekt zu einem zweiten Zeitpunkt unter einem vom ersten Einfallswinkel verschiedenen zweiten Einfallswinkel;
einer Lichtempfangsvorrichtung (40) zum Empfangen einer Reflexion (37) des ersten Lichts (35, 36) von der ersten Schicht zum ersten Zeitpunkt und einer Reflexion (34) des zweiten Lichts (33) von der zweiten Schicht zum zweiten Zeitpunkt und zum Erzeugen wenigsten eines Bildsignals und
einer Verarbeitungsvorrichtung (41) zum Verarbeiten des Bildsignals, um Informationen hinsichtlich der Schichten bereitzustellen.

2. Vorrichtung zum Auslesen von Informationen aus einer ersten lichtdurchlässigen Schicht und einer zweiten Schicht eines Objekts, mit:
einer ersten Lichtquelleneinrichtung (26) zum Richten von Licht (35, 36) auf das Objekt mit einer ersten vorgegebenen Wellenlänge oder Polarität unter einem ersten Einfallswinkel;
einer zweiten Lichtquelleneinrichtung (24) zum Richten von Licht (33) auf das Objekt mit einer zweiten vorgegebenen Wellenlänge oder Polarität unter einem vom ersten Einfallswinkel verschiedenen zweiten Einfallswinkel;
einer Lichtempfangsvorrichtung (40) zum Empfangen einer Reflexion (37) des ersten Lichts (35, 36) von der ersten Schicht und einer Reflexion (34) des zweiten Lichts (33) von der zweiten Schicht und zum Erzeugen wenigstens eines Bildsignals und
einer Verarbeitungseinrichtung (41) zum Verarbeiten des Bildsignals, um Informationen hinsichtlich der Schichten bereitzustellen.

3. Vcrrichtung nach Anspruch 1 oder 2, wobei die erste Schicht mehrere Mikrokugeln (16) mit ähnlichen optischen Eigenschaften wie Glas aufweist.

4. Vorrichtung nach Anspruch 1 oder 2, wobei die erste Schicht ein Material mit ähnlichen optischen Eigenschaften wie Polyester aufweist.

5. Vorrichtung nach einem der Ansprüche 1 bis 4, welche weiter einen Zweiwegespiegel (23) zum Richten des ersten Lichts (35, 36) auf das Objekt aufweist, der so angeordnet ist, daß das von der ersten Schicht reflektierte erste Licht den Zweiwegespiegel zur Erfassung durch die Lichtempfangsvorrichtung (40) durchläuft.

6. Vorrichtung nach einem der vorhergehenden Ansprüche, wobei die Verarbeitungsvorrichtung eine Datenverarbeitungseinheit, wie z. B. ein Personalcomputer (41) ist.

7. Vcrrichtung nach einem der vorhergehenden Ansprüche, wobei die erste und die zweite Lichtquelleneinrichtung (26, 24) so schaltbar sind, daß sie abwechselnd oder gleichzeitig arbeiten.

8. Vorrichtung nach einem der vorhergehenden Ansprüche, wobei die erste und die zweite Lichtquelleneinrichtung (26, 24) einzeln intensitätsgesteuert sind.

9. Vorrichtung nach einem der vorhergehenden Ansprüche, wobei die erste und die zweite Lichtquelleneinrichtung (26, 24) Licht mit unterschiedlichen Bandbreiten und/oder unterschiedlichen Wellenlängen erzeugen.

10. Vorrichtung nach Anspruch 9, wobei das Licht Ultraviolettlicht oder Infrarotlicht ist.

11. Vorrichtung nach einem der vorhergehenden Ansprüche, wobei die Lichtsempfangseinrichtung (40) einen Videobildempfänger, beispielsweise eine ladungsgekoppelte Vorrichtung, aufweist.

12. Vorrichtung nach Anspruch 3 oder einem der Ansprüche 4 bis 11 soweit dieser von Anspruch 2 abhängt, wobei die erste Schicht eine Plastikmateriallage (9) ist, welche mit den Mikrokugeln (16) versehen ist.

13. Vorrichtung nach einem der vorhergehenden Ansprüche, wobei die zweite Schicht ein Dokument (10) ist, das sich unterhalb der ersten Schicht befindet, wobei das Dokument (10) ein Quellenbild (12) aufweist.

14. Vorrichtung nach Anspruch 12, wobei das Dokument (10) ein Substrat (11) aufweist, auf dem das Quellenbild (12) ausgebildet ist, wobei das Substrat und das Quellenbild unterschiedliche Lichtreflexionseigenschaften aufweisen.

15. Vorrichtung nach Anspruch 13 oder 14, wobei das Dokument (10) ein Paß, eine Ausweiskarte, ein Grundeigentumsnachweis oder eine Aktie ist.

16. Vorrichtung nach einem der vorhergehenden Ansprüche, wobei ein Reflexionswinkel des ersten Lichts bezüglich der Position der Lichtempfangseinrichtung (40) kleiner als 1° ist.

17. Vorrichtung nach einem der vorhergehenden Ansprüche, wobei ein Reflexionswinkel des zweiten Lichts bezüglich der Position der Lichtempfangseinrichtung (40) größer als 1° ist.

18. Vorrichtung nach einem der vorhergehenden Ansprüche, wobei die Verarbeitungsvorrichtung (41) das Bildsignal mit wenigstens einem vorgegebenen Bild vergleicht, um die Informationen bereitzustellen.

19. Vorrichtung nach einem der vorhergehenden Ansprüche, wobei das Bildsignal eine Kombination des ersten und des zweiten Lichts darstellt.

20. Vorrichtung nach einem der vorhergehenden Ansprüche, ferner mit einer dritten Lichtquelleneinrichtung (50) zum Richten von (drittem) Licht (51) unter einem dritten Einfallswinkel, der wenigstens im wesentlichen senkrecht zum ersten Licht ist, auf das Objekt, wobei das dritte Licht in einer Ebene über eine Fläche des Objekts fokussiert ist.

21. Vorrichtung nach einem der vorhergehenden Ansprüche, wobei das Bildsignal ein vom Leuchten der ersten Lichtquelleneinrichtung (26) abgeleitetes erstes Bildsignal und ein von der zweiten Lichtquelleneinrichtung (24) abgeleitetes zweites Bildsignal umfaßt und wobei die Verarbeitung das Vergleichen des ersten Bildsignals mit dem zweiten Bildsignal umfaßt, um eine Differenz des Farbansprechens zu bestimmen, wobei das Ansprechen ein strukturiertes Beugungsgitter oder eine holographische Einprägung, die auf dem Objekt ausgebildet sind, anzeigt.

22. System zum Auslesen von Informationen, mit einer Vorrichtung nach einem der vorhergehenden Ansprüche 1 bis 21 und einem Objekt, welches eine erste lichtdurchlässige Schicht und eine zweite Schicht aufweist.

23. Verfahren zum Untersuchen eines Objekts mit einem Quellenbild (12) und einer darüber liegenden lichtdurchlässigen Schicht mit den Schritten:
Richten von Licht zu einem ersten Zeitpunkt unter einem ersten Einfallswinkel auf die Schicht, um eine Reflexion von Licht von der Schicht zu bewirken;
Richten von Licht zu einem zweiten Zeitpunkt unter einem zweiten Einfallswinkel auf das Quellenbild (12), um eine Reflexion von Licht von dem Quellenbild (12) zu bewirken;
Erfassen des reflektierten Lichts von der Schicht zum ersten Zeitpunkt und bei einem ersten Betrachtungsort, um ein erstes erfaßtes Bild bereitzustellen;
Erfassen des reflektierten Lichts vom Quellenbild (12) zum zweiten Zeitpunkt und bei einem zweiten Betrachtungsort, um ein zweites erfaßtes Bild bereitzustellen; und
Verarbeiten des ersten und/oder des zweiten Bilds, um Informationen hinsichtlich des Quellenbilds (12) und/oder der Schicht aufzulösen.

24. Verfahren zum Untersuchen eines Objekts mit einem Quellenbild (12) und einer darüber liegenden lichtdurchlässigen Schicht mit den Schritten:
Richten von Licht einer ersten vorgegebenen Wellenlänge oder Polarität unter einem ersten Einfallswinkel auf die Schicht, um zu bewirken, daß Licht von der Schicht reflektiert wird;
Richten von Licht einer zweiten vorgegebenen Wellenlänge oder Polarität unter einem zweiten Einfallswinkel auf das Quellenbild (12), um zu bewirken, daß Licht vom Quellenbild (12) reflektiert wird;
Erfassen des reflektierten Lichts der ersten vorgegebenen Wellenlänge oder Polarität von der Schicht und des reflektierten Lichts der zweiten vorgegebenen Wellenlänge oder Polarität vom Quellenbild (12), um ein erstes und ein zweites erfaßtes Bild bereitzustellen; und
Verarbeiten des ersten und/oder des zweiten Bilds, um Informationen hinsichtlich des Quellenbilds (12) und/oder der Schicht aufzulösen.

## Revendications

1. Appareil pour lire des informations à partir d'une première couche transmettant la lumière et d'une seconde couche d'un objet, ledit appareil comprenant :
des premiers moyens formant source de lumière (26) pour diriger la lumière (35, 36) selon un premier angle d'incidence sur l'objet à un premier instant ;
des seconds moyens formant source de lumière (24) pour diriger la lumière (33) selon un second angle d'incidence, différent dudit premier angle d'incidence, sur l'objet à un second instant ;
un dispositif de réception de lumière (40) pour recevoir une réflexion (37) de ladite première lumière (35, 36) à partir de ladite première couche audit premier instant, et une réflexion (34) de ladite seconde lumière (33) à partir de ladite seconde couche audit second instant et pour produire au moins un signal d'image ; et
un dispositif de traitement (41) pour traiter ledit signal d'image pour fournir des informations concernant lesdites couches.

2. Appareil pour lire des informations à partir d'une première couche transmettant la lumière et d'une seconde couche d'un objet, ledit appareil comprenant :
des premiers moyens formant source de lumière (26) pour diriger la lumière d'une première longueur d'onde ou polarité prédéterminée (35, 36) selon un premier angle d'incidence sur l'objet ;
des seconds moyens formant source de lumière (24) pour diriger la lumière d'une seconde longueur d'onde ou polarité prédéterminée (33) selon un second angle d'incidence différent dudit premier angle d'incidence, sur l'objet ;
un dispositif de réception de lumière (40) pour recevoir une réflexion (37) de ladite première lumière (35, 36) à partir de ladite première couche et une réflexion (34) de ladite seconde lumière (33) à partir de ladite seconde couche et pour produire au moins un signal d'image ; et
un dispositif de traitement (41) pour traiter ledit signal d'image pour fournir des informations concernant lesdites couches.

3. Appareil selon la revendication 1 ou 2, dans lequel la première couche comprend une pluralité de microsphères (16) ayant des propriétés optiques similaires à celles du verre.

4. Appareil selon la revendication 1 ou 2, dans lequel la première couche comprend un matériau ayant des propriétés optiques similaires à celles du polyester.

5. Appareil selon l'une quelconque des revendications 1 à 4 comprenant, de plus, un miroir bidirectionnel (23) pour diriger la première lumière 35, 36) vers ledit objet, et agencé de sorte que la première lumière qui a été réfléchie par la première couche passe à travers le miroir bidirectionnel pour être détectée par le dispositif de réception de lumière.

6. Appareil selon l'une quelconque des revendications précédentes, dans lequel le dispositif de traitement est une unité de traitement de données telle qu'un ordinateur personnel 41.

7. Appareil selon l'une quelconque des revendications précédentes, dans lequel les premiers et seconds moyens formant source de lumière (26, 24) sont susceptibles d'être commutés afin de fonctionner de manière alternéé ou simultanément.

8. Appareil selon l'une quelconque des revendications précédentes, dans lequel chacun des premiers et des seconds moyens formant source de lumière (26, 24) sont commandés en intensité individuellement.

9. Appareil selon l'une quelconque des revendications précédentes, dans lequel les premiers et seconds moyens formant source de lumière (26, 24) produisent une lumière à des bandes passantes différentes, et/ou à des longueurs d'onde différentes.

10. Appareil selon la revendication 9, dans lequel ladite lumière est sélectionnée à partir du groupe consistant en la lumière ultraviolette et la lumière infrarouge.

11. Appareil selon l'une quelconque des revendications précédentes, dans lequel les moyens de réception de lumière (40) comprennent un récepteur d'image vidéo, tel que, par exemple, un dispositif à couplage de charge.

12. Appareil selon la revendication 3 ou l'une quelconque des revendications 4 à 11 lorsqu'elle dépend de la revendication 2, dans lequel la première couche est une feuille de matière plastique (9) sur laquelle lesdites microsphères (16) sont appliquées.

13. Appareil selon l'une quelconque des revendications précédentes, dans lequel ladite seconde couche est un document (10) situé au-dessous de la première couche, ledit document (10) comprenant une image source (12).

14. Appareil selon la revendication 12, dans lequel ledit document (10) comprend un substrat (11) sur lequel ladite image source (12) est formée, ledit substrat et ladite image source ayant des propriétés de réflexion de lumière différentes.

15. Appareil selon la revendication 13 ou 14, dans lequel ledit document (10) est sélectionné à partir du groupe consistant en un passeport, une carte d'identité, un titre de propriété et un titre d'action.

16. Appareil selon l'une quelconque des revendications précédentes, dans lequel un angle de réflexion de ladite première lumière par rapport à la position des moyens de réception de lumière (40) est inférieur à 1°.

17. Appareil selon l'une quelconque des revendications précédentes, dans lequel un angle de réflexion de ladite seconde lumière par rapport à la position des moyens de réception de lumière (40) est supérieur à 1°.

18. Appareil selon l'une quelconque des revendications précédentes, dans lequel ledit dispositif de traitement (41) compare ledit signal d'image avec au moins une image prédéterminée pour fournir lesdites informations.

19. Appareil selon l'une quelconque des revendications précédentes, dans lequel ledit signal d'image représente une combinaison de ladite première lumière et de ladite seconde lumière.

20. Appareil selon l'une quelconque des revendications précédentes, comprenant, de plus, des troisièmes moyens formant source de lumière (50) pour diriger une (troisième) lumière (51) selon un troisième angle d'incidence, au moins sensiblement normal à ladite première lumière, sur ledit objet, ladite troisième lumière étant focalisée dans un plan sur toute une surface dudit objet.

21. Appareil selon l'une quelconque des revendications précédentes, dans lequel ledit signal d'image comprend un premier signal d'image déduit de l'allumage desdits premiers moyens formant source de lumière (26) et un second signal d'image déduit desdits seconds moyens formant source de lumière (24), et ledit traitement comprend la comparaison du premier signal d'image avec le second signal d'image pour déterminer une réponse de différence ce couleur, ladite réponse étant indicative d'un réseau de diffraction à motifs ou d'un gaufrage holographique formé sur ledit objet.

22. Système pour lire des informations, ledit système comprenant un appareil selon l'une quelconque des revendications 1 à 21 et un objet comprenant une première couche transmettant la lumière et une seconde couche.

23. Procédé pour examiner un objet comprenant une image source (12) et une couche transmettant la lumière sus-jacente, ledit procédé comprenant les étapes consistant à :
diriger la lumière à un premier instant selon un premier angle d'incidence sur ladite couche pour provoquer la réflexion de la lumière à partir de ladite couche ;
diriger la lumière à un second instant selon un second angle d'incidence sur ladite image source (12) pour provoquer la réflexion de la lumière à partir de ladite image source (12) ;
détecter ladite lumière réfléchie à partir de ladite couche audit premier instant et à un premier emplacement d'observation pour fournir une première image détectée ;
détecter ladite lumière réfléchie à partir de ladite image source (12) audit second instant et à un second emplacement d'observation pour fournir une seconde image détectée ; et
traiter lesdites première et/ou seconde images pour résoudre les informations concernant ladite image source (12) et/ou ladite couche.

24. Procédé pour examiner un objet comprenant une image source (12) et une couche transmettant la lumière sus-jacente, ledit procédé comprenant les étapes consistant à :
diriger la lumière d'une première longueur d'onde ou polarité prédéterminée selon un premier angle d'incidence sur ladite couche pour provoquer la réflexion de la lumière à partir de ladite couche ;
diriger la lumière d'une seconde longueur d'onde ou polarité prédéterminée selon un second angle d'incidence sur ladite image source (12) pour provoquer la réflexion de la lumière à partir de ladite image source (12) ;
détecter ladite lumière réfléchie de ladite première longueur d'onde ou polarité prédéterminée à partir de ladite couche et ladite lumière réfléchie de ladite seconde longueur d'onde ou polarité prédéterminée à partir de ladite image source (12) pour fournir des première et seconde images détectées ; et
traiter lesdites première et/ou seconde images pour résoudre les informations concernant ladite image source (12) et/ou ladite couche.
